# FASCICULE DE BREVET EUROPEEN

(11) **EP 1 723 385 B1**
(45) Date de publication et mention de la délivrance du brevet: **09.05.2007**
(21) Numéro de dépôt: 05736551.2
(22) Date de dépôt: 09.03.2005
(51) Int. Cl.: G01B 5/00, G01M 11/02, B24B 13/005

(54) **DISPOSITIF DE RELEVE DE LA TOPOGRAPHIE D"UNE SURFACE OPTIQUE**
EINRICHTUNG ZUR MESSUNG DER TOPOGRAPHIE EINER OPTISCHEN OBERFLÄCHE
DEVICE FOR MEASURING THE TOPOGRAPHY OF AN OPTICAL SURFACE

(30) Priorité: 11.03.2004 FR 0402545
(43) Date de publication de la demande: 22.11.2006
(73) Titulaire: SAGEM Défense Sécurité, 75015 Paris (FR)
(72) Inventeur: BURRUS, François, F-86000 Poitiers (FR); JULIENNE, Sébastien, F-86000 Poitiers (FR)
(74) Mandataire: Vougny, Christophe
(86) Numéro de dépôt international: PCT/FR2005/000562
(87) Numéro de publication internationale: WO 2005/098349

(56) Documents cités:
- US-A- 4 232 966
- US-A- 4 236 824
- US-A- 4 516 026
- US-A- 5 708 501

## Description

L'invention a trait au domaine de l'optique, au sens de la transmission, de la réfraction, de la diffraction ou de la réflexion de la lumière.

Elle concerne, plus particulièrement, le relevé de la forme tridimensionnelle - également appelée topographie - d'une face optique d'une pièce optique (telle qu'une lentille, un hublot, un miroir) après que celle-ci a subi des opérations de moulage et/ou d'usinage.

De nombreuses applications exigent aujourd'hui une extrême précision dans la fabrication de telles pièces optiques, afin que la topographie réelle de leurs faces, qui détermine en grande partie les qualités optiques de la pièce (qu'il s'agisse de transmission, de réfraction ou de réflexion de la lumière), corresponde autant que possible à la topographie théorique.

Citons à titre d'exemple les caméras à infrarouges, dans lesquelles la qualité des lentilles est tout à fait déterminante.

Ce type d'application a recours à des lentilles dont le diamètre est bien supérieur à l'épaisseur, dans un rapport de 1 à 10 et même au-delà, en fonction de la nature du matériau dans lequel est réalisé la lentille.

Le relevé de la topographie des faces d'une pièce optique est nécessaire pour vérifier sa correspondance avec la topographie théorique, et déterminer si la pièce doit subir une nouvelle opération d'usinage (par « usinage », on entend l'ensemble des opérations que subit la lentille, depuis l'enlèvement de matière jusqu'au polissage) afin de corriger les éventuels défauts relevés.

Un tel relevé est généralement effectué au moyen d'un dispositif comprenant une source générant un faisceau lumineux éclairant la face à mesurer de la pièce optique, laquelle repose sur un support de mesure ayant une surface d'appui annulaire coopérant avec un bord périphérique de la pièce, ainsi qu'un interféromètre au moyen duquel est effectué le relevé.

Même à l'aide des techniques modernes d'usinage des métaux ou de moulage des matières plastiques, il est impossible de garantir une parfaite planéité de la surface d'appui du support.

Et, même à supposer que cette surface d'appui soit plane après sa fabrication, elle peut être déformée par les contraintes résultant de l'assemblage de plusieurs pièces pour réaliser le support.

Or, comme nous l'avons vu, certaines pièces optiques sont minces en regard de leur diamètre. Aussi, lorsqu'une telle pièce est placée sur son support, subit-elle d'infimes distorsions lorsqu'elle vient reposer sur la surface d'appui de celui-ci.

Malgré leur caractère infime, ces distorsions sont suffisantes pour entraîner des erreurs dans le relevé de la topographie des faces de la pièce, les tolérances de forme étant de l'ordre du dixième de micron (0,1 µm).

Au final, il se peut que les erreurs que l'on attribue à l'usinage de la face mesurée proviennent en fait d'une déformation de la lentille sur son support, en sorte que les corrections effectuées sur cette face n'ont pour effet que d'aggraver encore la discordance entre topographie réelle et topographie théorique.

Le document US-A-4236824 décrit un dispositif de relevé de la topographie d'une face optique, qui comporte un support de mesure présentant une surface d'appuie sur laquelle est apte à reposer la pièce et qui appartient à un coussin élastiquement compressible.

L'invention vis à résoudre notamment les inconvénients précités en proposant un dispositif de relevé de la topographie d'une face optique d'une pièce optique, qui permette une plus grande précision des mesures, et par voie de conséquence permette d'améliorer les qualités optiques de cette pièce.

A cet effet, l'invention propose un dispositif selon la revendication 1.

De la sorte, la lentille ne subit qu'une déformation symétrique sous l'effet de son propre poids, aucune distorsion n'étant à craindre.

Dans le cas particulier d'une pièce optique à symétrie de révolution, il en résulte une force d'appui uniforme de la pièce sur son support.

Il suffit alors de tenir compte de la marge d'erreur, prévisible par le calcul, engendrée par la seule déformation due au poids de la pièce, pour effectuer les corrections nécessaires dans les mesures et ainsi déduire des mesures la topographie réelle de la face mesurée, au bénéfice de la qualité finale de la pièce.

D'autres objets et avantages de l'invention apparaîtront à la lumière de la description faite ci-après en référence aux dessins annexés dans lesquels :
- la figure 1 est une vue en élévation en coupe partielle illustrant un dispositif de relevé de la topographie d'une surface optique d'une lentille ;
- la figure 2 est une vue en plan de dessus, suivant un premier mode de réalisation, d'un support de mesure pour un dispositif tel que représenté sur la figure 1 ;
- la figure 3 est une vue en coupe du support de la figure 2, suivant le plan matérialisé par la ligne III-III de la figure 2 ; une lentille est représentée reposant sur le support ;
- la figure 4 est une vue d'élévation en coupe partielle illustrant un détail d'un support de mesure avec une lentille, suivant une variante de réalisation ;
- la figure 5 est une vue en coupe illustrant partiellement, suivant un second mode de réalisation, un support de mesure pour une pièce optique ;
- la figure 6 est une vue d'élévation en coupe du support de la figure 5, suivant le plan de coupe matérialisé sur la figure 5 par la ligne VI-VI ;
- la figure 7 est une vue d'élévation en coupe illustrant un support de mesure suivant une variante du second mode de réalisation.

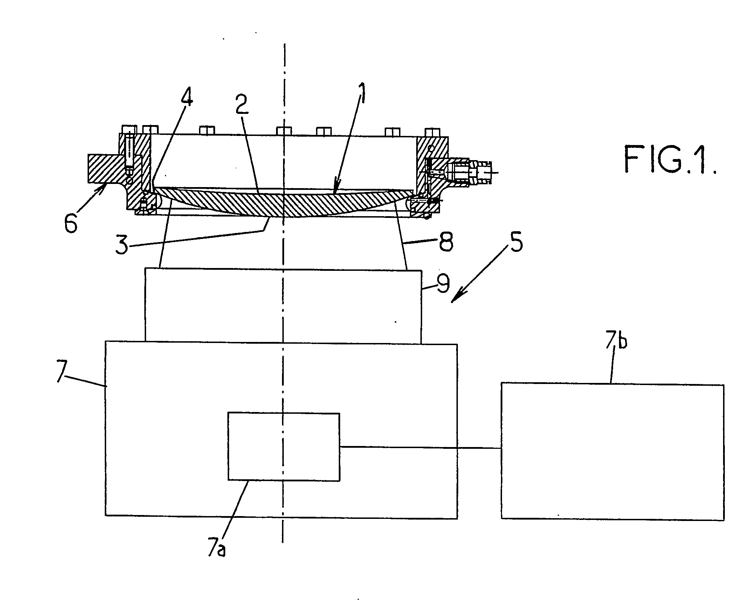

Sur la figure 1 est représentée une lentille 1 ayant deux faces optiques opposées 2, 3, reliées par une tranche 4. Cette lentille 1 a subi des opérations d'usinage visant à faire coïncider autant que possible la topographie réelle des faces optiques 2, 3 avec une topographie théorique prédéterminée en fonction de la destination de la lentille 1 (photographie, télémétrie, ophtalmie, etc).

Cette lentille 1 est placée au sein d'un dispositif 5 pour la mesure de la topographie réelle de ses faces 2, 3, afin de vérifier la concordance entre cette topographie et la topographie théorique et décider ensuite de la nécessité d'effectuer des corrections d'usinage.

Ce dispositif 5 comprend un support 6 sur lequel repose la lentille 1, ainsi qu'un interféromètre 7 placé d'un côté du support 6 (en l'occurrence sous celui-ci).

Pour des raisons de commodité, on appelle face supérieure la face 2 de la lentille 1 tournée à l'opposé de l'interféromètre 7, et face inférieure la face 3 opposée, tournée vers l'interféromètre 7. Les faces supérieure 2 et inférieure 3 sont ici représentées respectivement concave et convexe mais cette illustration n'est donnée qu'à titre d'exemple non limitatif.

Une source lumineuse (non représentée) génère générer un faisceau lumineux 8 (il s'agit en l'occurrence d'un laser) qui vient frapper à la fois la face inférieure 3 de la lentille 1 et une face d'un calibre optique 9 posé sur l'interféromètre.

On appelle topographie théorique la topographie de cette face du calibre 9, et topographie réelle la topographie de la face éclairée 3 de la lentille 1.

L'interféromètre 7 comprend une caméra 7a qui acquiert par réflexion les images de la face mesurée 3 de la lentille 1 et de la face du calibre 8, et les transmet vers un ordinateur muni de moyens de traitement d'image par interférométrie, afin de comparer ces images et en déduire les éventuelles corrections d'usinage que doit subir la lentille 1 afin que la topographie réelle de sa face éclairée 3 coïncide dans la mesure du possible avec la topographie théorique.

Le support 6 présente une surface d'appui 10 sur laquelle on vient poser la lentille 1 lors de sa mise en place sur le support 6. Des moyens peuvent être prévus pour adapter la taille du support 6 à celle de la lentille 1.

Quoi qu'il en soit, la surface d'appui 10 est agencée pour pouvoir coopérer, au moins localement, avec une zone périphérique 11 de la face inférieure 3 de la lentille 1, située au voisinage de sa tranche 4.

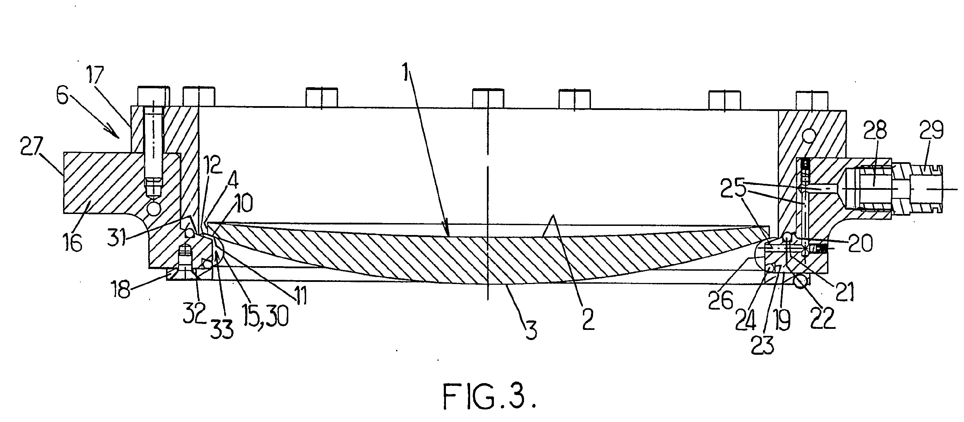

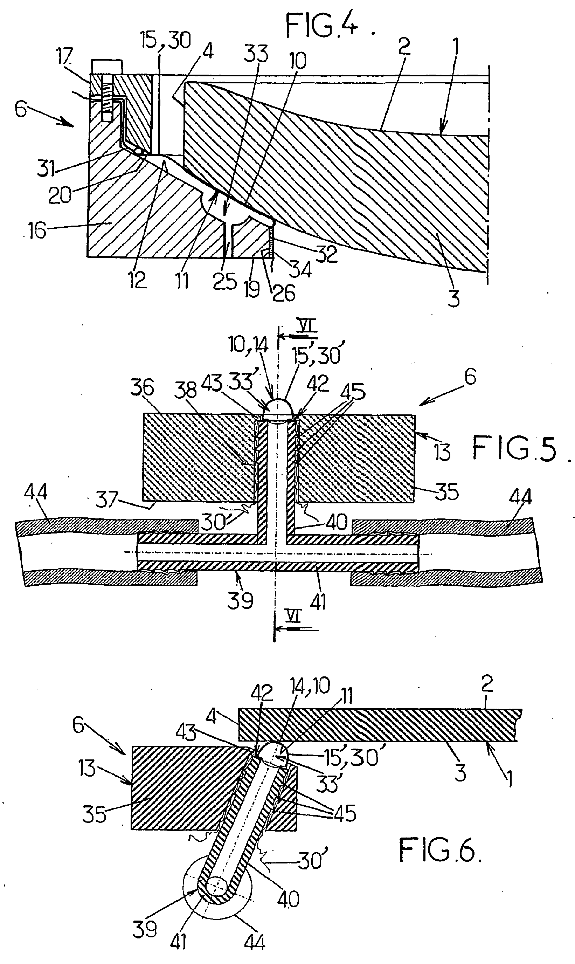

Suivant un premier mode de réalisation, illustré sur les figures 3 et 4 notamment, le support 6 se présente sous la forme d'une pièce cylindrique présentant un rebord annulaire 12 à l'aplomb duquel s'étend, de manière continue, la surface d'appui 10.

Suivant un second mode de réalisation, illustré sur les figures 5 et 6, le support 6 comporte une pluralité de modules 13 ayant chacun une zone locale d'appui 14, l'ensemble des zones d'appui 14 formant ensemble la surface d'appui 10 sur laquelle est destinée à reposer la lentille 1.

Quel que soit le mode de réalisation retenu, la surface d'appui 10 appartient à un coussin 15 élastiquement compressible qui assure une répartition uniforme de la réaction opposée par le support 6 au poids de la lentille 1.

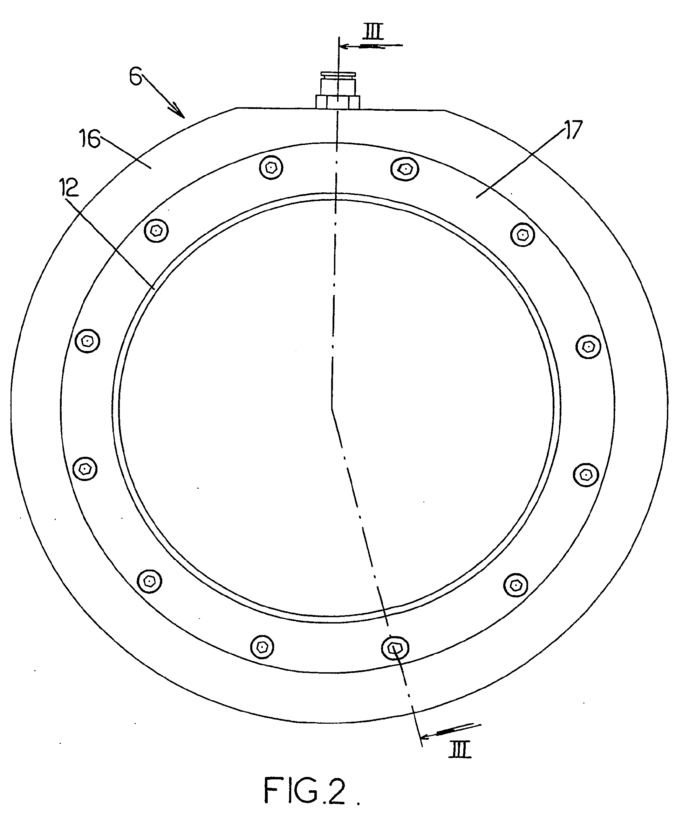

On décrit à présent le premier mode de réalisation, en référence aux figures 2 à 4.

Comme cela est visible sur la figure 3, le support 6 comporte un corps annulaire 16 à contour circulaire dont un épaulement circonférentiel tronconique forme le rebord 12 évoqué ci-dessus.

Le support 6 comporte en outre deux brides fixées au corps 16 de part et d'autre de celui-ci, à savoir une bride supérieure 17 sensiblement cylindrique à section en forme de L qui vient s'emboîter sur le corps 16, et une bride inférieure 18 qui vient se plaquer contre une face inférieure 19 du corps 16 à l'opposé de la bride supérieure 17, les brides 17, 18 étant fixées au corps 16 par vissage.

Comme cela est visible sur la figure 3, la bride supérieure 17 présente une surface d'extrémité 20 qui, lorsque la bride 17 est fixée au corps 16, vient se plaquer contre l'épaulement 12.

Une rainure 21 circonférentielle est ménagée dans l'épaulement 12 à l'aplomb de la surface d'extrémité 20 de la bride supérieure 17, rainure 21 dans laquelle est placé un joint torique 22 dont la fonction apparaîtra ci-après et qui, lorsque la bride supérieure 17 est montée sur le corps 16, se trouve comprimé entre l'épaulement 12 et la surface d'extrémité 20.

Du côté opposé à l'épaulement 12, la face inférieure 19 du corps 16 est munie d'une encoche 23 circonférentielle dans laquelle est aussi placé un joint torique 24 dont la fonction sera expliquée ci-après et qui, lorsque la bride inférieure 18 est montée sur le corps 16, se trouve comprimé entre eux.

Comme cela apparaît également sur la figure 3, le corps 16 est muni d'un canal 25 débouchant, d'une part, du côté intérieur du corps 16 (c'est-à-dire du côté de son axe de révolution), sur une surface cylindrique interne 26 joignant l'épaulement 12 à la face inférieure 19 et, du côté externe (c'est-à-dire radialement à l'opposé), sur une surface circonférentielle externe 27 où le canal 25 forme une embouchure 28 dans laquelle est introduit un embout 29 de raccord à un tuyau d'amenée d'air (non représenté) lui-même relié à une source d'air (non représentée).

Le coussin 15 est ici formé par un film gonflable 30, réalisé dans une matière plastique (par exemple un polyéthylène) qui présente deux bords 31, 32 pincés respectivement entre la surface d'extrémité 20 de la bride supérieure 17 et l'épaulement 12 d'une part, et la face inférieure 19 et la bride inférieure 18 d'autre part.

Comme cela est visible sur la figure 3, le film 30 recouvre la surface cylindrique interne 26 du corps 16 et une partie de l'épaulement 12 qui dépasse radialement de la bride supérieure 17 vers l'intérieur du support 6, le film 30 délimitant ainsi une chambre à air 33 annulaire en saillie à la fois vers l'intérieur et vers le haut du support 6.

Les joints toriques 22, 24 réalisent quant à eux une étanchéité de la chambre à air 33 vis-à-vis de l'air ambiant.

La chambre à air 33 est gonflable et, à l'inverse, dégonflable. Pour la gonfler, il suffit d'actionner la source d'air pour injecter de l'air dans la chambre 33 par le canal 25. Le poids d'une lentille étant raisonnable, il n'est pas nécessaire que la pression d'air dans la chambre 33 soit élevée. Par conséquent, la source d'air peut être réalisée au moyen d'un modeste vérin ou même d'une seringue ordinaire. Une pression comprise entre 1,01 et 1,1 bar apparaît suffisante pour assurer le soutien élastique d'une lentille pesant entre 50 et 1000 grammes. A titre d'exemple, une pression de 1,03 bar permet d'assurer le soutien élastique d'une lentille pesant 500 grammes.

Le coussin d'air ainsi réalisé permet d'assurer une répartition uniforme de la réaction du support 6 sur la circonférence de la lentille 1, de manière à lui opposer une résistance présentant une symétrie de révolution autour de l'axe de la lentille 1 et ainsi garantir que la déformation subie par celle-ci n'est due qu'à son propre poids, une telle déformation symétrique n'ayant aucune incidence sur la qualité de la mesure.

En variante, comme cela est représenté sur la figure 4, le support 6 ne comporte pas de bride inférieure. Le canal 25 débouche d'une part sur l'épaulement 12 et, d'autre part, du côté opposé, sur la face inférieure 19 du corps 16.

Le film 30 est, sur un bord 31, enserré entre le corps 16 et la bride supérieure 17 et, sur son autre bord 32, fixé directement au corps 16 au moyen d'un adhésif 34 telle qu'une colle ou un ruban adhésif double face.

Dans ce premier mode de réalisation, la forme tronconique de l'épaulement 12 permet au support 6 d'épouser la forme de la face inférieure 3 de la lentille 1.

On décrit à présent un second mode de réalisation, en référence aux figures 5 et 6.

Comme nous l'avons vu ci-dessus, le support 6 comprend une pluralité de modules 13 destinés à former conjointement la surface d'appui 10 pour la lentille 1.

Chaque module 13 comporte un corps 35 parallélépipédique ayant une face supérieure 36, tournée du côté opposé à l'interféromètre, c'est-à-dire du côté de la lentille 1, et une face inférieure 37 tournée au contraire du côté de l'interféromètre.

Chaque module 13 comporte un alésage 38 qui le traverse de part en part, alésage 38 dans lequel est introduit une canule 39 en T (ou en L) qui comprend un tube principal 40, constituant la jambe du T, et un tube secondaire 41 formant les bras du T et placé du côté de la face inférieure 37 du corps 35.

Le tube principal 40 de la canule 39 est introduit dans l'alésage 38 et présente une extrémité supérieure 42 qui vient buter contre un lamage 43 bordant l'alésage 38 du côté de la face supérieure 36 du module 13.

Les canules 39 sont toutes raccordées entre elles au moyen de canalisations souples 44 emmanchées sur leurs tubes secondaires 41 respectifs, l'une de ces canalisations 44 étant elle-même reliée à une source d'air (non représentée).

Comme cela est visible sur les figures 5 et 6, un film gonflable 30' est enfilé sur le tube principal 40 de chaque canule 39, ce film 30' recouvrant l'extrémité supérieure 42 et étant coincé entre le tube 40 et l'alésage 38.

Le coincement du film 30' (réalisé dans le même matériau que dans le premier mode de réalisation décrit ci-dessus) entre le tube 40 et l'alésage 38 peut être renforcé au moyen de bourrelets annulaires 45 prévus sur le tube 40 à proximité de son extrémité supérieure 42, afin d'éviter tout retrait intempestif du film 30'.

Chaque film 30' délimite une chambre à air 33' qui s'étend en saillie à l'extrémité du tube 40 et qui, lorsque cette chambre à air 33' est mise sous pression au moyen de la source d'air, dépasse de la face supérieure 36, comme cela est représenté sur la figure 5, pour former un coussin 15' élastiquement compressible sur laquelle est destinée à être posée la lentille 1.

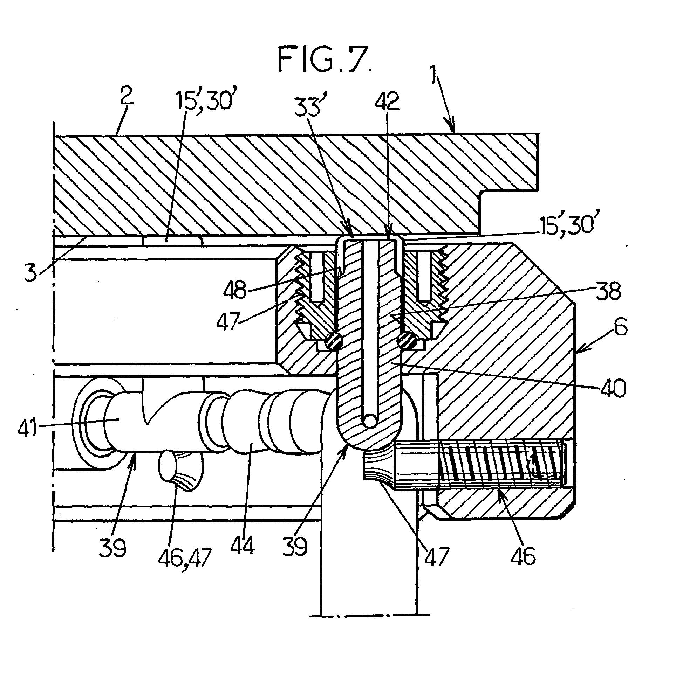

En variante, tel qu'illustré sur la figure 7, le support 6 est circulaire (comme dans le premier mode de réalisation décrit ci-dessus), et comprend une pluralité d'alésages 38 répartis sur sa circonférence, dans lesquels sont introduits les tubes principaux 40 d'une pluralité de canules 39 reliées entre elles par des canalisations 44.

Le soutien des canules 39 est assuré par une pluralité de taquets 46 vissés radialement dans le support 6, chaque taquet 46 coopérant, par une extrémité interne 47, avec le tube secondaire 41 d'une canule 39.

Le tube principal 40 de chaque canule 39 est reçu dans un manchon 47 qui, formant l'alésage 38, est vissé dans le support 6.

Le film 30' vient recouvrir l'extrémité supérieure 42 du tube principal, lequel présente un épaulement 48 permettant de ménager un certain débattement du film 30' lors de son gonflement et de réaliser la chambre à air 33'.

Comme cela est visible sur la figure 7, le tube principal 40 dépasse légèrement du support 6, afin de permettre la sustentation de la lentille 1.

L'étanchéité du film 30' est assurée par un joint torique qui le maintient en contact périphérique permanent avec le tube principal 40.

Les canules 39 étant raccordées entre elles, la pression (comme dans le premier mode de réalisation, comprise entre 1,01 et 1,1 bar environ) est uniforme dans toutes les chambres à air 33', de sorte que lorsque, comme cela est représenté sur les figures 6 et 7, la lentille 1 est posée sur son support 6, elle repose conjointement sur l'ensemble des coussins 15' qui opposent en réaction au poids de la lentille 1 une force de réaction uniforme autour de l'axe de révolution de celle-ci.

Les résultats obtenus par la mise en oeuvre de ce second mode de réalisation sont donc les mêmes que ceux obtenus avec le premier mode de réalisation exposé ci-dessus.

Les spécifications de pression sont similaires à ce qui est décrit ci-dessus pour une chambre à air annulaire continue. Ainsi, des essais ont été conduits sur un hublot pesant 1 kilogramme, monté sur 10 modules 13 uniformément répartis sur la circonférence du hublot et ayant des zones d'appui 14 d'un diamètre de 5 millimètres : une pression de 1,2 bar a suffi pour obtenir une élévation de 0,1 mm du hublot, ce qui a permis de conduire les mesures de manière satisfaisante.

Au total, quel que soit le mode de réalisation retenu, les expériences conduites par les inventeurs ont montré que les relevés topographiques effectués à l'aide du dispositif qui vient d'être décrit ont une précision dix fois supérieure aux relevés réalisés à l'aide des dispositifs connus.

Il en résulte une fiabilité accrue des mesures et, par voie de conséquence, une meilleure qualité des lentilles fabriquées.

L'utilisation d'un film 30, 30' en matière plastique a l'avantage d'être peu coûteuse. Un tel film, similaire à celui qui est disponible dans le commerce pour l'emballage des produits alimentaires, présente également des avantages mécaniques : son application contre une surface en verre (matériau généralement employé dans la fabrication des lentilles) génère des frottements élevés qui permettent un maintien ferme de la lentille. De plus, sa faible épaisseur lui confère une grande élasticité, de sorte qu'il offre peu de résistance à l'écrasement par la lentille.

Les montages décrits ci-dessus permettent en outre de remplacer aisément et rapidement le film 30, 30' lorsque celui-ci présente des signes de faiblesse ou lorsqu'il est endommagé.

On comprendra que, bien qu'appliqué, dans la description qui vient d'être faite, à une lentille, le dispositif 5 peut être appliqué à toute pièce optique (miroir, hublot, cette liste étant non limitative).

## Revendications

1. Dispositif (5) de relevé de la topographie d'une face optique (2) d'une pièce optique (1), qui comporte un support de mesure (6) présentant une surface d'appui (10) sur laquelle est apte à reposer la pièce (1), **caractérisé en ce que** ladite surface d'appui (10) appartient à un coussin (15, 15') élastiquement compressible formé par une chambre à air (33) sous pression délimitée par un film souple gonflable (30).

2. Dispositif (5) selon la revendication 1, dans lequel ledit support (6) comporte un corps (16) présentant une surface annulaire (12) sur laquelle s'étend le film (30), ladite surface annulaire (12) et le film (30) délimitant conjointement une chambre à air (33) dans laquelle débouche un canal (25) d'amenée d'air pratiqué dans ledit corps (16).

3. Dispositif (5) selon la revendication 2, dans lequel ladite surface annulaire (12) est au moins en partie formée par un épaulement tronconique.

4. Dispositif (5) selon la revendication 2 ou 3, dans lequel le support (6) comporte une bride supérieure (17), fixée au corps (16), et dans laquelle un premier bord (31) du film (30) se trouve pincé entre la bride supérieure (17) et le corps (16).

5. Dispositif (5) selon la revendication 4, dans lequel le support (16) comporte un joint d'étanchéité (22) disposé entre le corps (16) et la bride supérieure (17).

6. Dispositif (5) selon la revendication 4 ou 5, dans lequel le support (6) comporte une bride inférieure (18) fixée au corps (16), et dans lequel un second bord (32) du film (30), opposé au premier (31), se trouve pincé entre le corps (16) et la bride inférieure (18).

7. Dispositif (5) selon la revendication 6, dans lequel le support (6) comporte un joint d'étanchéité (24) comprimé entre le corps (16) et la bride inférieure (18).

8. Dispositif (5) selon la revendication 4 ou 5, dans lequel un second bord (32) du film (30), opposé au premier (31), est fixé au corps (16) par collage.

9. Dispositif (5) selon la revendication 1, dans lequel le coussin (15') est formé par une pluralité de chambres à air (33') sous pression, et dans lequel la pression régnant dans les chambres à air (33') est uniforme.

10. Dispositif (5) selon la revendication 9, dans lequel chaque chambre à air (33') est délimitée par un film souple gonflable (30').

11. Dispositif (5) selon la revendication 10, dans lequel ledit support (6) comporte une pluralité de modules (13) espacés présentant chacun une face supérieure (36) dont dépasse ledit film (30').

12. Dispositif (5) selon la revendication 11, dans lequel chaque module (13) présente un alésage (38) débouchant sur la face supérieure (36) et comprend une canule (39) introduite dans ledit alésage (38), ledit film (30') étant coincé entre la canule (39) et l'alésage (38), et dans lequel les canules (39) sont raccordés fluidiquement entre elles.

## Claims

1. Device (5) for recording the topography of an optical face (2) of an optical part (1), which comprises a measuring support (6) having a supporting surface (10) on which the part (1) can rest, **characterized in that** said supporting surface (10) belongs to an elastically compressible cushion (15, 15') formed of a pressurized air chamber (33) delimited by a flexible inflatable film (30).

2. Device (5) according to Claim 1, in which said support (6) comprises a body (16) having an annular surface (12) on which the film (30) is stretched, said annular surface (12) and the film (30) jointly delimiting an air chamber (33) into which an air supply channel (25), made in the said body (16), emerges.

3. Device (5) according to Claim 2, in which said said annular surface (12) is at least partly formed of a truncated conical shoulder.

4. Device (5) according to Claim 2 or 3, in which the support (6) has an upper flange (17) fixed to the body (16), and in which a first edge (31) of the film (30) is gripped between the upper flange (17) and the body (16).

5. Device (5) according to Claim 4, in which the support (16) has a seal (22) positioned between the body (16) and the upper flange (17).

6. Device (5) according to Claim 4 or 5, in which the support (6) has a lower flange (18) fixed to the body (16), and in which a second edge (32) of the film (30), opposite the first (31), is gripped between the body (16) and the lower flange (18).

7. Device (5) according to Claim 6, in which the support (6) has a seal (24) compressed between the body (16) and the lower flange (18).

8. Device (5) according to Claim 4 or 5, in which a second edge (32) of the film (30), opposite the first (31), is fixed to the body (16) by adhesive bonding.

9. Device (5) according to Claim 1, in which the cushion (15') is formed of a plurality of pressurized air chambers (33'), and in which the pressure existing in the air chambers (33') is uniform.

10. Device (5) according to Claim 9, in which each air chamber (33') is delimited by an inflatable flexible film (30').

11. Device (5) according to Claim 10, in which said support (6) has a plurality of spaced modules (13), each having an upper face (36) which said film (30') overlaps.

12. Device (5) according to Claim 11, in which each module (13) has a bore (38) emerging on the upper face (36) and includes a tube (39) introduced into said bore (38), said film (30') being wedged between the tube (39) and the bore (38), and in which the tubes (39) are connected together fluidically.

## Patentansprüche

1. Vorrichtung (5) zum Messen der Topographie einer optischen Oberfläche (2) eines Optikteils (1), mit einer Messhalterung (6), die eine Auflagefläche (10) aufweist, auf der das Teil (1) zu lagern vermag,
**dadurch gekennzeichnet, dass** die Auflagefläche (10) einem elastisch komprimierbaren Kissen (15, 15') zugehörig ist, das durch eine unter Druck stehende Luftkammer (33) gebildet ist, die durch eine elastische aufblasbare Folie (30) begrenzt ist.

2. Vorrichtung (5) nach Anspruch 1,
bei der die Halterung (6) einen Körper (16) mit einer ringförmigen Oberfläche (12) aufweist, auf der sich die Folie (30) erstreckt, wobei die ringförmige Oberfläche (12) und die Folie (30) zusammen eine Luftkammer (33) begrenzen, in die ein in dem Körper (16) ausgebildeter Kanal (25) zum Zuführen von Luft mündet.

3. Vorrichtung (5) nach Anspruch 2,
bei der die ringförmige Oberfläche (12) wenigstens zum Teil durch einen kegelstumpfartigen Absatz gebildet ist.

4. Vorrichtung (5) nach Anspruch 2 oder 3,
bei der die Halterung (6) einen am Körper (16) befestigten oberen Flansch (17) aufweist, und bei der ein erster Rand (31) der Folie (30) zwischen den oberen Flansch (17) und den Körper (16) geklemmt ist.

5. Vorrichtung (5) nach Anspruch 4,
bei der die Halterung (16) eine Dichtung (22) aufweist, die zwischen dem Körper (16) und dem oberen Flansch (17) angeordnet ist.

6. Vorrichtung (5) nach Anspruch 4 oder 5,
bei der die Halterung (6) einen am Körper (16) befestigten unteren Flansch (18) aufweist, und bei der ein dem ersten Rand entgegengesetzter zweiter Rand (32) der Folie (30) zwischen den Körper (16) und den unteren Flansch (18) geklemmt ist.

7. Vorrichtung (5) nach Anspruch 6,
bei der die Halterung (6) eine Dichtung (24) aufweist, die zwischen dem Körper (16) und dem unteren Flansch (18) komprimiert ist.

8. Vorrichtung (5) nach Anspruch 4 oder 5,
bei der ein dem ersten Rand entgegengesetzter zweiter Rand (32) der Folie (30) an dem Körper (16) durch Kleben befestigt ist.

9. Vorrichtung (5) nach Anspruch 1,
bei der das Kissen (15') durch eine Vielzahl von unter Druck stehenden Luftkammern (33') gebildet ist, und bei der der in den Luftkammern (33') herrschende Druck gleichmäßig ist.

10. Vorrichtung (5) nach Anspruch 9,
bei der jede Luftkammer (33') durch eine elastische aufblasbare Folie (30') begrenzt ist.

11. Vorrichtung (5) nach Anspruch 10,
bei der die Halterung (6) eine Vielzahl von Modulen (13) umfasst, die voneinander beabstandet sind und jeweils eine Oberseite (36) aufweisen, an der die Folie (30') übersteht.

12. Vorrichtung (5) nach Anspruch 11,
bei der jedes Modul (13) eine auf der Oberseite (36) mündende Bohrung (38) aufweist und eine in die Bohrung (38) eingeführte Kanüle (39) umfasst, wobei die Folie (30') zwischen die Kanüle (39) und die Bohrung (38) geklemmt ist, und bei der die Kanülen (39) fluidisch miteinander verbunden sind.
